(19) Europäisches Patentamt
European Patent Office
Office européen des brevets

(11) Publication number: **0 136 723**
**B1**

(12) **EUROPEAN PATENT SPECIFICATION**

(45) Date of publication of patent specification: **09.08.89**

(51) Int. Cl.$^4$: **G 11 B 5/64**

(21) Application number: **84111950.6**

(22) Date of filing: **05.10.84**

(54) **Recording carrier comprising an amorphous magnetooptic recording medium layer consisting of rare earth-transition armorphous metal formed on a plastic substrate.**

(30) Priority: **05.10.83 JP 185094/83**

(43) Date of publication of application:
**10.04.85 Bulletin 85/15**

(45) Publication of the grant of the patent:
**09.08.89 Bulletin 89/32**

(84) Designated Contracting States:
**DE FR GB NL**

(56) References cited:

**IEEE TRANSACTIONS ON MAGNETICS, vol. MAG-19, no. 5, September 1983, pages 1647-1649, New York, US; J. DESSERRE et al.: "Rare earth - transition metal alloys: Another way for perpendicular recording"**

**JOURNAL OF APPLIED PHYSICS, vol. 54, no. 5, May 1983, pages 2820-2823, New York, US; D. JEANNIOT et al.: "A transition-metal-rare-earth alloy for perpendicular magnetic recording"**

(73) Proprietor: **DAICEL CHEMICAL INDUSTRIES, LTD.**
**No. 1-Banchi, Teppo-cho**
**Sakai-shi Osaka-fu 590 (JP)**

(72) Inventor: **Tsukane, Nagayoshi**
**1903-3 Okihama Aboshi-ku**
**Himeji-shi Hyogo-ken (JP)**

(74) Representative: **Boeters, Hans Dietrich, Dr. et al**
**Boeters, Bauer & Partner Thomas-Wimmer-Ring 14**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 136 723 B1

## Description

1. Title of the invention

The present invention relates to an improvement of magnetooptic recording carriers including a vertically magnetizable amorphous layer of a rare earth-transition metal with a Kerr rotational angle of 0.3 degree or more on a transparent plastic substrate.

2. Detailed description of the invention

This invention concerns a magnetooptic recording medium for recording and reproducing information using laser beams and, more specifically, it relates to a magnetooptic recording medium comprising an amorphous layer of rare earth-transition metal formed on a plastic substrate for use in E-DRAW recording material capable of erasing and re-recording, i.e. repeated recording.

A magnetooptic recording method is known in which a rare earth-transition metal amorphous layer is formed on a substrate, for example, by means of vacuum deposition, sputtering or ion plating, and information is written and erased through the thermomagnetic effect by irradiating laser beams onto the amorphous layer and reading the information through the magneto-optical effect. As the substrate for the amorphous layer, although glass plates, metal plates such as of aluminum, or plastic plates such as of acrylic resin and polycarbonate resin, have been proposed, prior study was mainly directed to the formation of the amorphous layer on a glass plate; c.f. J. Appl. Phys. 54 (1983) 2820—3. Although it is possible in the case of a glass substrate to form a vertically magnetizable amorphous layer thereon, a technique of forming a vertically magnetizable amorphous layer on a plastic substrate in a stable state has not yet been found at present. Specifically, a Kerr rotational angle of greater than 0.3 degrees can be obtained in the case of the glass substrate. However, in the case of the plastic substrate, Kerr rotational angle of only about 0.1 degree can be obtained. While the angle may be increased to more than 0.2 degrees in an exceptional case, it lacks long-time stability and has poor reproducibility. In view of the above, there was a great need to find a technique for forming a vertically magnetizable amorphous layer stably on an easy to handle plastic substrate instead of the glass or aluminum substrate employed in the prior art.

It was thought that the vertical magnetization characteristic of a rare earth-transition metal amorphous layer is dependent on the distortion in the amorphous layer (refer to H. Takagi, et al, J. Appl. Physics 50 (3), p. 1642—1644). Accordingly, the surface property of the substrate on which the amorphous layer is formed constitutes a significant factor. Although it is not apparent at present why the rare earth-transition metal amorphous layer capable of vertical magnetization can be formed on a glass plate but not stably on a plastic plate, the present inventors believe that the reason is basically attributable to the following two factors.

(1) Acrylic or polycarbonate resins employed as the plastic substrate generally have lower surface energy as compared with that of the glass substrate and thus poor bondability to the rare earth-transition metal amorphous layer and as a result it is difficult to produce distortion in the amorphous layer.

(2) Oxygen, moisture, monomer and the like remain in the plastic plate and they have a detrimental effect on the rare earth-transition metal amorphous layer and impair the vertical magnetization characteristic thereof.

In view of the above, a method of forming a moisture-proof inorganic protection layer, for example made of $SiO_2$ and $CaF_2$, has been proposed in order to solve the problem (2) (see for example Japanese Patent Laid-Open Nos. 27451/1982 and 32238/1983). However, problem (1) can not be solved by such a provision of the protection layer. This means no rare earth-transition metal amorphous layer having stable vertical magnetization characteristic could be formed on plastic substrates.

Accordingly, an object of the present invention is to provide a magnetooptic recording carrier including a vertically magnetizable amorphous layer of a rare earth-transition metal with a Kerr rotational angle of 0.3 degree or greater on a substrate.

This problem is solved by a magnetooptic recording carrier, characterized in that a polymer layer having a good bondability to a transparent plastic substrate is interposed between the amorphous layer of a rare earth-transition metal and the transparent plastic substrate.

The polymer having a good bondability to the plastic substrate usable in this invention may comprise any organic polymers, crosslinkable polymer both of room temperature curing type and heat curing type being particularly preferred. The crosslinkable polymers may include various materials, for instance, polyallyl compound, polyfunctional acrylic compound, usual thermosetting resin, alkylsilicate hydrolyzate and organopolysiloxane, as long as they are polymers having a good bondability to the plastic substrate.

The polymers as described above may be formed on the plastic substrate usually by a wet process such as post curing of the prepolymer, applying of the polymer in the form of a solution in a solvent or the like, or they may be formed by a dry process such as a deposition method using an ion plating technique, provided that a uniform polymer layer can be formed on the plastic substrate. In the case of the wet process, any of the known means such as spin coating, roll coating, bar coating and dipping may be used. The thickness of the polymer layer may be selected such that a uniform gas barrier layer in close contact with the plastic substrate can be formed and it is generally between 0.01—10 μm and preferably between 0.1—5 μm.

The magnetooptic recording medium to which

this invention is applicable may be any of the known rare earth-transition metal amorphous alloys including, for example, Tb-Fe alloy (Japanese Patent Publication No. 20619/1982), Dy-Fe alloy (Japanese Patent Publication No. 20692/1982), Gd-Tb-Fe alloy (Japanese Patent Laid-Open No. 126907/1981), Gd-Tb-Dy-Fe alloy (Japanese Patent Laid-Open No. 94948/1982), Gd-Co (Japanese Patent Laid-Open No. 121719/1979) and Tb-Fe-Co or the like. Preferably, the rare earth-transition metal amorphous layer is formed on the polymer layer in this invention by means of sputtering, ion plating or the like. The thickness of the amorphous layer is generally between 500—1500 Å.

In addition to the intermediate polymer layer according to this invention, other known intermediate layers and/or protection layers can additionally be formed. Specifically, it is also possible to form a layer of dielectric material such as of SiO and $SiO_2$ on the rare earth-transition metal amorphous layer to improve the S/N ratio and use it also as a protection layer (see for example Japanese Patent Laid-Open Nos. 74843/1981, 156943/1981), or further to form additionally a reflection film of for example Au and Ag to improve the S/N ratio (see for example Japanese Patent Laid-Open Nos. 84744/1981, 12428/1982).

The magnetooptic recording medium carrier prepared in accordance with this invention can be applied both for the reflection type recording/reproducing system utilizing the Kerr effect and the transmission type recording/reproducing system utilizing the Faraday effect. For details of these systems, reference can be made to "Introduction to Video Disc and DAD", p. 108—150 edited by Soichi Iwamura, published by Kabushiki Kaisha Corona, November 1, 1982.

The plastic substrate usable in this invention may be in any desired configuration such as disc or card, as well as film, tape or belt.

Any transparent synthetic resin may be used as the material for the plastic substrate, including, for instance acrylic resin, polycarbonate resin, styrenic resin and polyester resin such as PET. These resins can be molded by any molding process, for example, injection molding, compression molding, photopolymerization or the like. The plastic substrate may optionally be formed on the surface thereof with track guide grooves or in the manner of other signal grooves.

3. Brief description of the drawings

The appended drawing shows a conceptional cross sectional view showing the layered structure of the magnetooptic recording carrier having the polymer layer according to this invention.

In the drawing,

1—plastic substrate

2—rare earth-transition metal amorphous recording medium layer

3—polymer layer

4—protection/sensitization layer.

Figure 1 is a conceptional diagram showing the basic structure of the magnetooptic recording carrier according to this invention and shows a transparent plastic substrate 1 made of acrylic resin, polycarbonate resin or the like, an amorphous recording medium layer 2 made of rare earth-transition metal such as TbFe, GdTbFe and GdTbDyFe, a polymer layer 3 according to this invention, a protection layer 4 and/or sensitization layer comprising dielectric material and/or reflective material.

Any material may be used for the polymer layer 3 in this invention as long as it has a good bondability to the plastic substrate as described above and the following materials can be mentioned as examples.

(1) Polymers of a polyallyl monomer: for example diethylene glycol bisallyl carbonate, triallyl cyanurate, diallyloxyalkyl maleate,

(2) polymers of a polyfunctional acrylic monomer: for example ethylene glycol di(metha)acrylate; di-, tri- or polyethylene glycol di(metha)acrylate; alkane diol di(metha)acrylate; oligoester di(metha)acrylate; allyl- or vinyl-methacrylate; (metha)acrylic acid; glycidyl methacrylate; and (metha)acrylic amide,

(3) thermosetting resin: for example unsaturated polyester, melamine and polyurethane,

(4) hydrolyzate of alkyl silicate: for example hydrolyzate of ethyl silicate,

(5) organopolysiloxane: for example tetrachlorosilane; methyl- or phenyl-trialkoxysilane.

The polymer layer 3 according to this invention ensures the vertical magnetization characteristic of the rare earth-transition metal amorphous recording medium layer 2, as well as serving to protect the recording medium 2 against oxygen, moisture and/or monomer intruding from the plastic substrate 1.

In order to protect the amorphous medium layer 2 against external oxygen and/or moisture, a protection layer 4 is formed on the outer side of the recording medium layer 2. While the protection layer can be made from the same material as that for the polymer layer 3, other polymers than above can also be used, for example epoxy resin, polyester resin, diallyl phthalate resin, vinylidene resin and synthetic rubber. Inorganic moisture proof film such as made of $SiO_2$ and $CaF_2$ can be used as well. In addition to the protection layer 4, a reflection layer (not shown) can further be disposed in order to improve the S/N ratio. The reflection layer comprises metal such as Al, Ag, Au, Cu, Zn and Sn and this layer may be disposed either at the inside or the outside of the protection layer 4. By the provision of the reflection layer, the Kerr rotational angle and the S/N ratio can be increased by several times while still depending on the film thickness of the dielectric protection layer.

Examples of the polymer layer according to this invention will now be explained. In each of the examples except Example 3, the plastic substrate is prepared by injection molding (using "Dinamelter" trade name, manufactured by Meiki Seisakusho) of acrylic resin (MFR2) and the amorphous recording medium is formed by sputtering (using a sputtering device manufactured by Nippon Shinku K.K.).

Example 1 (thermosetting resin—polyurethane resin)

2 mol of ε-caprolactone and 1 mol of hydroxyethyl methacrylate were reacted to prepare a prepolymer (FM-2). A mixture of 31.9% by weight of FM-2 and 68.1% by weight of a mixed acrylic monomer consisting of methyl methacrylate, butyl acrylate and methacryl amide was admixed with a curing agent of the following structure (Duranate 24A-100, trade name, manufactured by Asahi Kasei Industrial Co.):

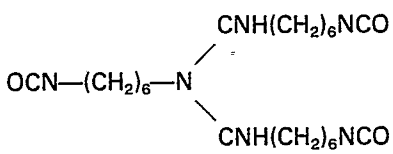

such that the molar ratio of NCO group to OH group in FM-2 is 1/1. Then, a coating thereof was applied to an acrylic resin substrate using a spin coater to give a film of 3 μm thickness and kept at 70°C in an oven to form a cured layer.

Tb/Fe (23/77 in composition ratio (atomic ratio)) was deposited 1000 Å thick on the layer thus cured under vacuum of $10^{-3}$ Torr using a magnetron sputtering device manufactured by Nippon Shinku K.K. and further $SiO_2$ was formed thereon as a protection layer with a thickness of 1000 Å to prepare a magnetooptic recording disc. When measured by a polar Kerr rotation measuring device, the Kerr rotational angle (θk) was 0.26, which is equivalent to the value in the case where the Tb/Fe layer is formed on a glass substrate.

The recording disc thus obtained maintained the same Kerr rotational angle θk even after 6 months. It was also confirmed by an Auger electron spectrometer that the Tb/Fe layer did not undergo oxidative degradation.

Example 2 (organosiloxane)

A polyorganosiloxane solution was prepared as described in Example 1 of Japanese Patent Laid-Open No. 38863/1982. Thus, 27 parts of ethanol (first class grade chemical) and 3 parts of deionized water were mixed, to which 30 parts of solid flakes of hydrolysis condensates of methyl triethoxy silane were added and dissolved completely in about 40 min under vigorous stirring to prepare a 50% solution thereof.

Separately, 23 parts of ethanol (first class grade chemical), 0.45 parts of curing catalyst comprising a phenol salt of 1,8-diazabicyclo (5,4,0)undecene-7, 0.1 parts of anionic surface active agent containing fluoro carbon chain and 17 parts of glacial acetic acid (first class grade chemical) were well mixed in that order to prepare a catalyst solution. The 50% solution and the catalyst solution as described above were mixed to prepare a coating solution containing 30 parts of flakes of methyl triethoxy silane hydrolysis condensate and 3 parts of water (GR—coat solution).

Then, a substrate or a disc made of methyl methacrylate resin of 300 mmϕ and 1.2 mm thickness was washed sufficiently, immersed in the GR coat solution, withdrawn at a speed of 10 mm/min—500 mm/min and then immediately introduced into a hot blow drier adjusted to 70°C to be dried and cured for 5 hours. The thickness of the coat layer was 0.06—4 μm. As another method of forming the layer, the same GR coat solution was allowed to fall on a methyl methacrylate resin substrate placed on a spin coater driven at a rotational speed of 200—6000 rpm. Soon after, the coated substrate was placed in a hot blow drier at 70°C to carry out drying and curing for 5 hours. The thickness of the coated membrane thus obtained was 0.04—3 μm.

Tb-Fe (atomic ratio Tb:Fe=22:78) was formed to a thickness of about 1000 Å on the thus cured layer under vacuum of $5\times10^{-3}$ Torr using a magnetron type sputtering device manufactured by Nippon Shinku Gijutsu K.K. and furthermore $SiO_2$ was formed thereon to a thickness of about 1000 Å as the protection layer by using the same device. A cellophane tape (No. 29, 24 mm width, manufactured by Nitto Denki Kogyo K.K.) was stuck on the coated surface of the magnetooptic recording disc thus obtained and the bondability or bonding strength was tested with an angle of about 45°, and it was found that no peeling of the coated layers occurred at all. Then, the Kerr rotational angle θk was measured using the polar Kerr rotation angle measuring device and it was found that the θk was 0.25—0.27°, which is the same value as that where the Tb/Fe layer is formed on a glass substrate.

The recording disc thus obtained maintained the same Kerr rotational angle θk even after 6 months and it was confirmed by the Auger electron spectrometer that there was no oxidative degradation in the Tb/Fe layer.

Example 3 (polyallyl compound)

According to the method as described in US Patent No. 3465076 (Mitsubishi Rayon), a prepolymer of diethylene glycol bisallyl carbonate was coated and heat cured on a glass plate to prepare a cast film. MMA (methylmethacrylate) monomer was cast on the cast film and then polymerised to prepare a PMMA plate whose surface was covered with the diethylene glycol bisallyl carbonate film (trade name, CR-39). The resulting surface coated PMMA substrate was dried under vacuum at 70°C for about 40 hours, on which was sputtered a Tb/Fe layer to a thickness of about 1000 Å using the same device as in Example 1 and $SiO_2$ film was further formed thereon to a thickness of 1000 Å as the protection membrane. The Kerr rotational angle θk of the magnetooptic recording disc thus obtained was 0.23°. Furthermore, no oxidative degradation was observed in the Tb/Fe layer even 6 months after.

Example 4 (polyfunctional acrylic compound)

25 parts of DPHA (dipentaerythritol hexaacrylate) manufactured by Nippon Kayaku K.K., 10

parts of P2100 (polyester acrylate) manufactured by Nippon Kayaku K.K., 5 parts of HX220 (polyesteracrylate) manufactured by Nippon Kayaku K.K., 15 parts of toluene and 55 parts of n-buthanol were mixed with each other. 1.5 parts of initiator Irgacure 651 available from Ciba Co. were admixed as an ultraviolet curing catalyst to prepare a coating solution (here and hereinafter all parts mean parts by weight).

A PMMA substrate of 300 mmφ and 1.2 mm thickness was washed sufficiently, dried and then supplied to a spin coater. The coating solution was allowed to fall on the substrate to be uniformly coated with a rotation speed of 500 rpm—1000 rpm. Then, the substrate was placed at a distance of 10 cm from an ultra high voltage mercury lamp (lamp intensity 80 W/cm) and cured under the irradiation of ultraviolet rays for about 20 sec. The thickness of the coating layer was 0.2 μm—1 μm.

The TbFe (atomic composition ratio Tb:Fe=22:78) layer was formed to a thickness of about 1000 Å on the cured coating layer obtained in this way under vacuum of $5\times10^{-3}$ Torr using a magnetron type sputtering device manufactured by Nippon Shinku K.K., and $SiO_2$ was further formed thereon to a thickness of about 1000 Å as a protection layer using the same device.

The bondability of the magnetooptic recording disc thus obtained was tested in the same cellophane tape method as in Example 2. Peeling of the coated layers was observed neither in Example 4 nor in Example 5. The Kerr rotational angle θk was 0.26—0.27, which is the same as that in the case where the Tb/Fe layer is formed on a glass substrate.

The discs in Examples 4 and 5 still had the same Kerr rotational angle θk even 6 months later. It was confirmed that no oxidation occurred in the TbFe layer by using the Auger electron spectrometer.

Example 5 (protection layer)

A second protection layer was formed to a thickness of 0.2 μm (2000 Å) on the $SiO_2$ protection layer of the magnetooptic recording disc obtained in Example 4 using the same coating solution and the same method as in Example 4. The property of the disc thus obtained was substantially the same as that of Example 4.

Although this invention has been described above referring to particular examples, it is no way limited only thereto. For example, the polymer layer according to this invention can be formed not only directly on the plastic substrate, but may also be formed by way of an appropriate primer layer or may be formed after a surface treatment, such as etching, of the substrate.

As apparent from the foregoing explanations, the vertical magnetization characteristic can be obtained in a stable manner by putting the polymer layer according to this invention between the plastic substrate and the rare earth-amorphous layer, and thus a plastic substrate which hitherto could not be used because of lack of stability and reliability can now be employed as the magnetooptic recording carrier.

**Claims**

1. A magnetooptic recording carrier including a vertically magnetizable amorphous layer of a rare earth-transition metal with a Kerr rotational angle of 0.3 degree or more on a substrate, characterized in that said substrate is a transparent plastic substrate and in that a polymer layer (3) having a good bondability to said transparent plastic substrate (1) is interposed between said vertically magnetizable amorphous layer of a rare earth-transition metal (2) and said transparent plastic substrate (1).

2. The magnetooptic recording carrier as defined in claim 1, in which the polymer layer comprises a crosslinkable polymer.

3. The magnetooptic recording carrier as defined in claim 1 or 2, in which the transparent plastic substrate is made of an acrylic resin, polycarbonate resin, styrenic resin or polyester resin, and the rare earth-transition metal amorphous layer is formed with material selected from the group consisting of Tb-Fe, Tb-Fe-Co, Dy-Fe, Gd-Tb-Fe, Gd-Tb-Dy-Fe and Gd-Co alloys.

4. The magnetooptic recording carrier as defined in claim 2, in which the polymer layer is formed with at least one polymer selected from the group consisting of polyallyl compound, polyfunctional acrylic compound, thermosetting resin, hydrolyzate of alkyl silicate and organopolysiloxane.

5. The magnetooptic recording carrier as defined in any one of claims 1 to 4, in which a reflection layer and/or dielectric layer (4) is formed on the surface of the rare earth-transition metal amorphous layer on the side opposite to the polymer layer.

6. The magnetooptic recording carrier as defined in any one of claims 1 to 5, in which the thickness of the polymer layer is between 0.01—10 μm.

**Patentansprüche**

1. Magneto-optischer Aufzeichnungsträger, der eine vertikal magnetisierbare, amorphe Schicht eines Seltenerdmetalls/Übergangsmetalls mit einem Kerr-Rotationswinkel von 0,3° oder mehr auf einem Substrat enthält, dadurch gekennzeichnet, daß das Substrat ein transparentes Kunststoff-Substrat ist und daß eine Polymerschicht (3) mit einer guten Bindungsfähigkeit gegenüber dem transparenten Kunststoff-Substrat (1) zwischen der vertikal magnetisierbaren, amorphen Schicht eines Seltenerdmetalls/Übergangsmetalls (2) und dem transparenten Kunststoff-Substrat (1) angeordnet ist.

2. Magneto-optischer Aufzeichnungsträger nach Anspruch 1, worin die Polymerschicht ein vernetzbares Polymeres enthält.

3. Magneto-optischer Aufzeichnungsträger nach Anspruch 1 oder 2, worin das transparente

Kunststoff-Substrat aus einem Acrylharz, Polycarbonatharz, Styrolharz oder Polyesterharz gefertigt ist und die amorphe Schicht eines Seltenerdmetalls/Übergangsmetalls mit Material gefertigt ist, das aus der aus Tb-Fe-, Tb-Fe-Co-, Dy-Fe-, Gd-Tb-Fe-, Gd-Tb-Dy-Fe- und Gd-Co-Legierungen bestehenden Gruppe ausgewählt ist.

4. Magneto-optischer Aufzeichnungsträger nach Anspruch 2, worin die Polymerschicht mit mindestens einem Polymeren gefertigt ist, welches aus der aus Polyallylverbindungen, polyfunktionellen Acrylverbindungen, hitzehärtenden Harzen, Hydrolysaten von Alkylsilikaten und Organopolysiloxanen bestehenden Gruppe ausgewählt ist.

5. Magneto-optischer Aufzeichnungsträger nach einem der Ansprüche 1 bis 4, worin auf der Oberfläche der amorphen Schicht eines Seltenerdmetalls/Übergangsmetalls, die der Polymerschicht gegenüberliegt, eine Reflexionsschicht und/oder eine dielektrische Schicht (4) gebildet ist.

6. Magneto-optischer Aufzeichnungsträger nach einem der Ansprüche 1 bis 5, worin die Dicke der Polymerschicht zwischen 0,01 und 10 µm beträgt.

**Revendications**

1. Un support d'enregistrement magnéto-optique comprenant une couche amorphe magnétisable verticalement contenant un alliage de terres rares et de métaux de transition avec un angle de Kerr de 0,3 degré ou plus sur un substrat, caractérisé en ce que ledit substrat est un substrat en plastique transparent et en ce que une couche polymère (3) ayant une bonne capacité de liaison audit substrat en plastique transparent (1) est interposée entre ladite couche amorphe magnétisable verticalement contenant un alliage de terres rares et de métaux de transition (2) et ledit substrat en plastique transparent (1).

2. Le support d'enregistrement magnéto-optique comme défini dans la revendication 1, dans lequel la couche polymère comprend un polymère réticulable.

3. Le support d'enregistrement magnéto-optique comme défini dans la revendication 1 ou 2, dans lequel le substrat en plastique transparent est fait de résine acrylique, de résine polycarbonate, de résine styrénique ou de résine polyester, et la couche amorphe contenant un alliage de terres rares et de métaux de transition est formée de matériau choisi dans le groupe comprenant les alliages de Tb-Fe, Tb-Fe-Co, Dy-Fe, Gd-Tb-Fe, Gd-Tb-Dy-Fe et Gd-Co.

4. Le support d'enregistrement magnéto-optique comme défini dans la revendication 2, dans lequel la couche polymère est formée avec au moins un polymère sélectionné d'après le groupe consistant en un composé polyallyl, un composé acrylique polyvalent, de la résine thermodurcissable, de l'hydrolysat de silicate d'alkyle et d'organopolysiloxane.

5. Le support d'enregistrement magnéto-optique tel que défini dans l'une quelconque des revendications 1 à 4, dans lequel une couche de réflection et/ou une couche diélectrique (4) est formée à la surface de la couche amorphe contenant un alliage de terres rares et de métaux de transition sur le coté opposé à la couche polymère.

6. Le support d'enregistrement magnéto-optique tel que défini dans l'une quelconque des revendications 1 à 5, dans lequel l'épaisseur de la couche polymère se situe entre 0,01 et 10 µm.

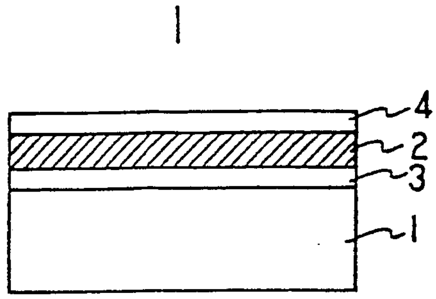
1
4
2
3
1